# EUROPEAN PATENT APPLICATION

(11) **EP 4 471 946 A1**
(43) Date of publication of application: **04.12.2024**
(21) Application number: 24171344.5
(22) Date of filing: 19.04.2024
(51) Int. Cl.: H01M 50/167, H01M 50/184, H01M 50/188, H01M 50/342, H01M 50/536, H01M 50/538, H01M 50/545, H01M 50/548, H01M 50/559, H01M 50/56

(54) **RECHARGEABLE BATTERY**

(30) Priority: 30.05.2023 KR 20230069390
(71) Applicant: Samsung SDI Co., Ltd., Yongin-si, Gyeonggi-do 17084 (KR)
(72) Inventor: YANG, Junho, 17084 Yongin-si (KR); KIM, Joungku, 17084 Yongin-si (KR); CHOI, Woohyuk, 17084 Yongin-si (KR); KANG, Bonggeun, 17084 Yongin-si (KR); PARK, Hyunsuk, 17084 Yongin-si (KR); KWON, Junhwan, 17084 Yongin-si (KR); LEE, Taeyoon, 17084 Yongin-si (KR); JUNG, Hyunki, 17084 Yongin-si (KR); KIM, Myungseob, 17084 Yongin-si (KR); YU, Gwan-hyeon, 17084 Yongin-si (KR); KO, Sunggwi, 17084 Yongin-si (KR); JUN, Wootae, 17084 Yongin-si (KR)
(74) Representative: Marks & Clerk LLP

(57) **Abstract**

A rechargeable battery includes: a spiral wound electrode assembly; a case accommodating the electrode assembly; a vent plate closing and sealing an opening at a side of the case; a current collecting plate electrically connecting a second electrode of the electrode assembly and a beading portion of the case; and a gasket between the second current collecting plate and the vent plate and between the second current collecting plate and the case. The second current collecting plate includes: a base portion on the second electrode; an elastic portion bent from the base portion at an inward angle toward a center of the base portion and at an outward angle toward an outer edge of the base portion; and a wing welding portion connected to an end of the elastic portion and welded to the beading portion.

## Description

### BACKGROUND

### 1. Field

Aspects of embodiments of the present disclosure relate to a rechargeable battery. More particularly, the present disclosure relates to a rechargeable battery that connects a current collecting plate to a beading portion of a case.

### 2. Description of the Related Art

With the demand for mobile devices and recent technological advancements, the demand for rechargeable batteries as an energy source is increasing. As one example, a cylindrical rechargeable battery includes an electrode assembly that is designed to be charged and discharged, a case accommodating the electrode assembly, and a cap assembly that is electrically connected to the electrode assembly and seals an open side of the case.

For example, the electrode assembly may be formed by disposing a positive electrode and a negative electrode on both sides of a separator and spirally winding the positive electrode, the separator, and the negative electrode together in a jelly roll form. In the electrode assembly, one electrode (e.g., one of the positive or negative electrode) is connected to the cap assembly through a current collecting plate, and the other electrode (e.g., the other one of the positive or negative electrode) is connected to the case through a lead tab.

The cap assembly may include a current interrupt device (CID), and in this case, the opening of the case is sealed by a beading portion and a crimping portion with a gasket interposed between the current interrupt device and the case.

Because the gasket is compressed by (or between) the beading portion and the crimping portion, an inner end of the gasket may interfere with the current collecting plate, and in this case, the closing and sealing force of the gasket to the opening may be reduced. To maintain the closing and sealing force of the gasket, the current collecting plate may be connected to the beading portion on one side of the gasket. In this case, a part of the current collecting plate is connected to an electrode uncoated portion, and another part of the current collecting plate presses on the electrode uncoated portion, which may cause interference.

### SUMMARY

Embodiments of the present disclosure provide a rechargeable battery that prevents interference between a current collecting plate and an electrode uncoated portion.

A rechargeable battery, according to an embodiment of the present disclosure, includes: an electrode assembly formed by spirally winding a first electrode, a separator, and a second electrode; a case accommodating the electrode assembly; an electrode terminal in a first opening at one side of the case and electrically insulated from the case; a first current collecting plate electrically connecting the first electrode and the electrode terminal; a vent plate closing and sealing a second opening at another side of the case; a second current collecting plate electrically connecting the second electrode and a beading portion of the case at an inner side of the vent plate; and a gasket between the second current collecting plate and the vent plate and between the second current collecting plate and the case. The gasket closes and seals between a crimping portion connected to the beading portion. The second current collecting plate includes: a base portion on an uncoated portion of the second electrode; an elastic portion connected to the base portion; and a wing welding portion connected to the elastic portion and welded to the beading portion. The elastic portion is bent at a first inward angle toward a center of the base portion in a radial direction thereof and at a first outward angle toward an outer edge of the base portion in the radial direction, and the first inward angle is an acute angle formed between the base portion and the elastic portion.

The second current collecting plate may further include a bottom welding portion extending outwardly in the radial direction from the base portion and may be welded to the uncoated portion of the second electrode. The elastic portion may be spaced apart from the bottom welding portion in a circumferential direction of the base portion and may be connected to an outer edge or the outside of the base portion in the radial direction.

A gap may be maintained between an outer end of the bottom welding portion and an inner end of the beading portion in the radial direction of the base portion.

The base portion may contact the uncoated portion of the second electrode across its entire area.

The bottom welding portion and the wing welding portion may each be formed in plural and arranged alternately along the base portion in a circumferential direction of the base portion.

The bottom welding portion and the elastic portion may be connected by a concave groove in the base portion to disperse stress concentrated between the bottom welding portion and the elastic portion.

The bottom welding portion may have a first welding line extending in the radial direction, and the wing welding portion may have a second welding line extending in the circumferential direction.

The first inward angle may be smaller than the first outward angle.

The wing welding portion may extend farther in the circumferential direction than a width of the elastic portion.

The elastic portion may bend upwardly and inwardly in the radial direction at the first inward angle, the elastic portion may bend upwardly and outwardly in the radial direction at the first outward angle, and the wing welding portion may be bent outwardly at a distal end of the elastic portion and is welded to the beading portion.

The gasket may have an escape groove to accommodate the wing welding portion. The escape groove may also accommodate the distal end of the elastic portion, and an inner protrusion in the escape groove may insulate between the distal end of the elastic portion and the vent plate.

The beading portion may have a flat portion at an upper side of a curved portion thereof (e.g. after it curves convexly inwardly and above where it curves concavely inwardly, and the wing welding portion may be welded to the flat portion.

The elastic portion may be bent at an eleventh inward angle toward a center of the base portion in the radial direction after being bent at the first outward angle, the first outward angle may be an acute angle, and the eleventh inward angle may form an obtuse angle at a portion of the elastic portion after the first outward angle.

The elastic portion may be bent at an eleventh inward angle toward a center of the base portion in the radial direction after being bent at the first outward angle, the first outward angle may be an acute angle, the elastic portion may be bent at an eleventh outward angle toward an outer edge of the base portion after being bent at the eleventh inward angle, the eleventh inward angle may be an acute angle, and the eleventh outward angle may form an obtuse angle at a portion of the elastic portion after the eleventh inward angle.

The elastic portion may be bent at an eleventh inward angle toward a center of the base portion in the radial direction after being bent at the first outward angle, the first outward angle may be an acute angle, the elastic portion may be bent at an eleventh outward angle toward an outer edge of the base portion in the radial direction after being bent at the eleventh inward angle, the eleventh inward angle may be an obtuse angle, and the eleventh outward angle may form an obtuse angle at a portion of the elastic portion after the eleventh inward angle.

The elastic portion may have a rib extending in the radial direction of the base portion.

According to embodiments of the present disclosure, the base portion is placed on an uncoated portion of the second current collecting plate, the elastic portion is connected to the base portion and bent at at least one first inward angle toward a center of the base portion in the radius (or radial) direction of the base portion and at at least one first outward angle toward an outer edge of the base portion in the radius (or radial) direction, and the first inward angle forms an acute angle between the base portion and the elastic portion such that interference between the second current collecting plate and the uncoated portion of the second electrode can be prevented.

According to embodiments of the present disclosure, the first inward angle and the first outward angle of the elastic portion reduce the height of the second current collecting plate, that is, the height of the elastic portion, and thus, even when a gap in a height direction between the vent plate and the uncoated portion is relatively narrow, interference between the elastic portion and the uncoated portion can be prevented.

At least some of the above and other features of the invention are set out in the claims.

### BRIEF DESCRIPTION OF THE DRAWINGS

FIG. 1 is a longitudinal cross-sectional view of a rechargeable battery according to an embodiment of the present disclosure.
FIG. 2 is a cross-sectional view of a portion of the rechargeable battery shown in FIG. 1 before the vent plate is combined by interposing a gasket in a second opening in the case .
FIG. 3 is a perspective view of a second current collecting plate of the rechargeable battery shown in FIG. 1.
FIG. 4 is a cross-sectional view of the gasket shown in FIG. 2.
FIG. 5 is a cross-sectional view of a portion of the rechargeable battery shown in FIG. 2 in which the gasket is disposed and the vent plate is then combined to the second opening in the case.
FIG. 6 is a cross-sectional view of a portion of rechargeable battery according to another embodiment of the present disclosure in which a vent plate is combined to a second opening in a case by interposing a gasket.
FIG. 7 is a cross-sectional view of a portion of rechargeable battery according to another embodiment of the present disclosure in which a vent plate is combined to a second opening in a case by interposing a gasket.
FIG. 8 is a cross-sectional view of a portion of rechargeable battery according to another embodiment of the present disclosure in which a vent plate is combined to a second opening in a case by interposing a gasket.
FIG. 9 is a perspective view of a second current collecting plate in the rechargeable battery shown in FIG. 8.
FIG. 10 is a top plan view of a second current collecting plate according to another embodiment of the present disclosure.
FIG. 11 is a cross-sectional view XI-XI of a part of the elastic portion of the second current collecting plate shown in FIG. 10.

### DETAILED DESCRIPTION

Hereinafter, the present disclosure will be described more fully hereinafter with reference to the accompanying drawings, in which embodiments of the present disclosure are shown. As those skilled in the art would realize, the described embodiments may be modified in various different ways, all without departing from the scope of the present disclosure. The drawings and description are to be regarded as illustrative in nature and not restrictive.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

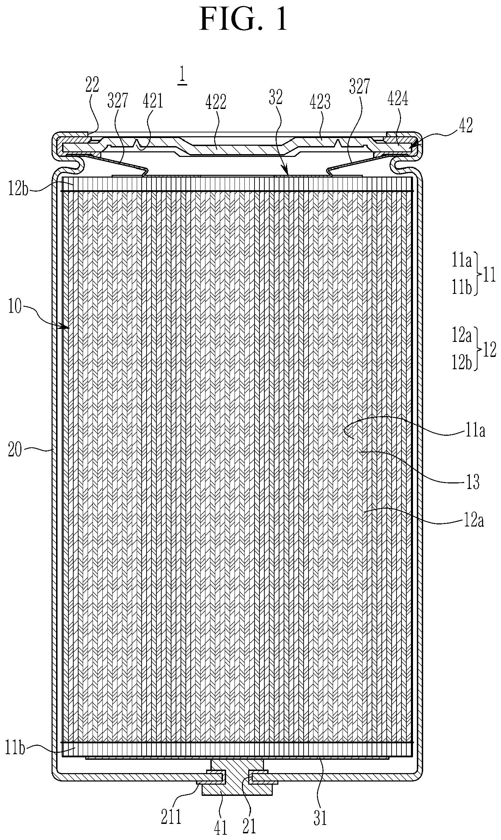

FIG. 1 is a longitudinal cross-sectional view of a rechargeable battery according to an embodiment of the present disclosure. Referring to FIG. 1, a rechargeable battery 1, according to an embodiment, includes an electrode assembly 10 designed to be charged and discharged, a case 20 accommodating (or embedding) the electrode assembly 10, and a first current collecting plate 31, a second current collecting plate 32, an electrode terminal 41, a vent plate 42, and a gasket 50 that are connected to the electrode assembly 10.

The electrode assembly 10 is formed in a jelly roll state by winding a first electrode 11, a separator 13, and a second electrode 12. The first electrode 11 and the second electrode 12 each include a member formed of a thin metal plate having coated portions 11a and 12a, where an active material is coated on opposite sides of the member, and uncoated portions 11b and 12b, where the member is exposed without being coated with the active material.

For example, the first electrode 11 may be a positive electrode by coating a positive active material on an aluminum (Al) substrate, and the second electrode 12 may be a negative electrode by coating a negative active material on a copper (Cu) substrate.

The uncoated portions 11b and 12b of the first electrode 11 and the second electrode 12 are respectively provided at opposite ends in the spiral-winding axis direction (e.g., at vertically opposite ends in FIG. 1), but the electrode terminal 41 and the case 20, which have different polarities, may face in the same direction. On the opposite side of electrode terminal 41, a vent plate 42 is positioned.

The case 20 is a cylinder to accommodate the electrode assembly 10, and the electrode terminal 41 and the vent plate 42 are provided at both ends (e.g., opposite ends) in the axial direction of the case 20, respectively. The electrode terminal 41 is connected to the first electrode 11 through the first current collecting plate 31, and the case 20 is connected to the second electrode 12 through the second current collecting plate 32. In this case, the vent plate 42 is electrically separated from (e.g., is electrically insulated or isolated from) the second current collecting plate 32 and the case 20 and does not have polarity.

The electrode terminal 41 connected to the first electrode 11 of the electrode assembly 10 is inserted into the case 20 from the outside and is provided on one side of the case 20. To this end, the case 20 has a first opening 21 partially opened at one side thereof. The electrode terminal 41 is installed in a state in which it is electrical insulated from the case 20 and forms an air-tight structure with respect to an electrolyte solution through a sealing member 211 in the first opening 21.

In such an embodiment, the first current collecting plate 31 is electrically connected to the uncoated portion 11b of the first electrode 11 and, thus, is electrically and mechanically connected to the electrode terminal 41. The first current collecting plate 31 is electrically connected to the electrode terminal 41 in a manner (e.g., with a structure) that reduces resistance by contacting most of the uncoated portion 11b of the first electrode 11.

For example, one end of the electrode terminal 41 is connected to the first current collecting plate 31 by welding, and the other end, and a body of the electrode terminal 41, may be installed in (e.g., may extend through) the first opening 21 in the case 20 as a rivet structure. The electrode terminal 41 protrudes from the outer surface of the case 20 around the first opening 21 and may act as a positive terminal. In such an embodiment, the first current collecting plate 31 is a positive current collecting plate.

In addition, the case 20 has a second opening 22 that is fully opened for insertion of the electrode assembly 10 at the other side of the case 20. The vent plate 42 seals the second opening 22 after insertion of the electrode assembly 10 into the case 20 and may be electrically insulated from the case 20.

In such an embodiment, the second current collecting plate 32 is electrically connected to the uncoated portion 12b of the second electrode 12 and, thus, is electrically connected to the case 20. The second current collecting plate 32 is connected to the case 20 in a manner (e.g., with a structure) contacting most of the uncoated portion 12b of the second electrode 12 to reduce resistance.

The vent plate 42 is electrically insulated from the second current collecting plate 32 and is installed in the second opening 22 in the case 20 through a crimping process. Due to the connection of the second current collecting plate 32, the case 20 may act as a negative terminal. In such an embodiment, the second current collecting plate 32 may be a cathode current collecting plate.

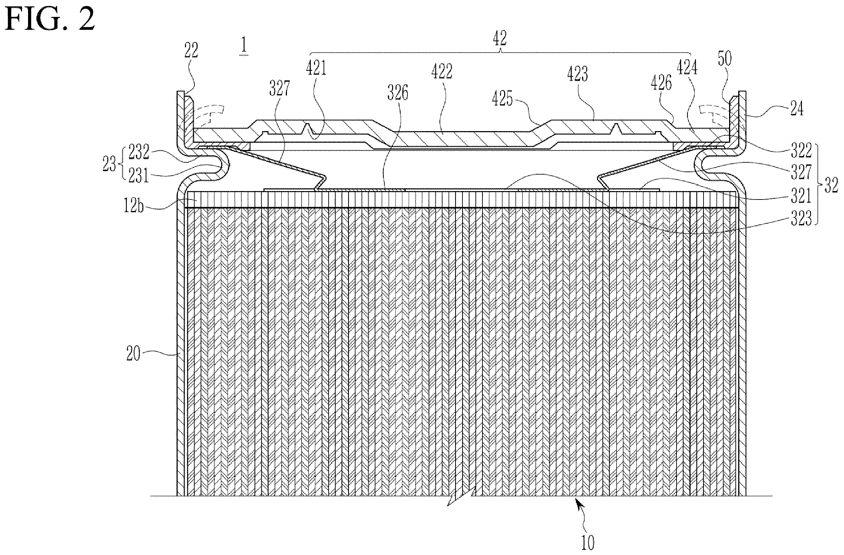

FIG. 2 is a cross-sectional view of a portion of the rechargeable battery shown in FIG. 1 in a state before the vent plate is combined to the second opening in the case by interposing a gasket therebetween. Referring to FIGS. 1 and 2, the second current collecting plate 32 connects (e.g., electrically connects) the second electrode 12 to a beading portion 23 of the case 20.

Through the beading process, the beading portion 23 is formed adjacent to the second opening 22 in the case 20, and a crimping portion 24 connected to the beading portion 23 is formed through a crimping process. That is, the case 20 includes the beading portion 23 and the crimping portion 24.

The beading portion 23 is formed as a depressed portion of the case 20 towards a center of the diameter direction of the case 20 at an upper side of the case 20 while the electrode assembly 10 is accommodated in the case 20, thereby preventing the electrode assembly 10 from moving up and down relative to the case 20.

The crimping portion 24 is connected to the beading portion 23 with a structure protruding relatively outwardly in a direction perpendicular to the beading portion 23 in the diameter direction. Through the crimping process, the beading portion 23 slopes downwardly (or is bent downwardly) toward the inside in the diameter direction (see, e.g., FIG. 1).

The gasket 50 is used in the crimping process. After the crimping process, the gasket 50 is disposed between the second current collecting plate 32 and the vent plate 42 and between the second current collecting plate 32 and the case 20, thereby closing and sealing between the beading portion 23 and the crimping portion 24 connected to the beading portion 23. In addition, the gasket 50 forms an air-tight structure between the second current collecting plate 32 and the second opening 22 in the case 20.

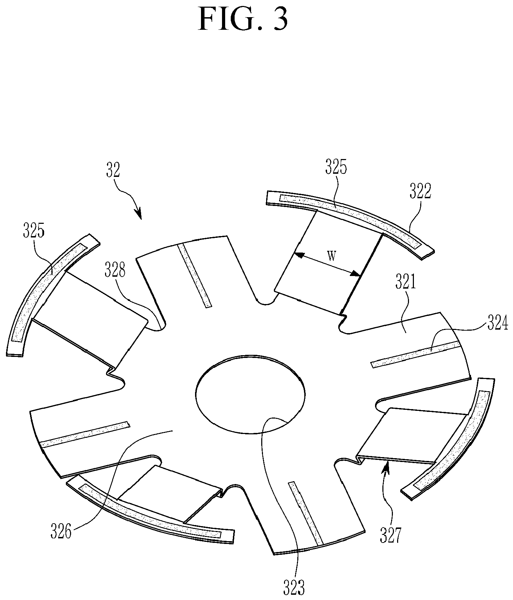

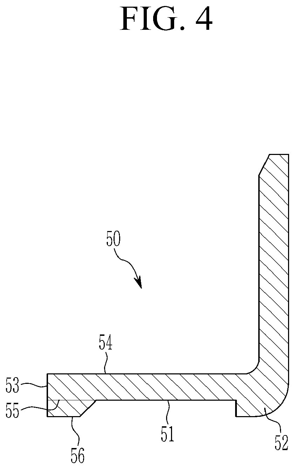

FIG. 3 is a perspective view of the second current collecting plate shown in FIG. 1, FIG. 4 is a cross-sectional view of the gasket in the state shown in FIG. 2, and

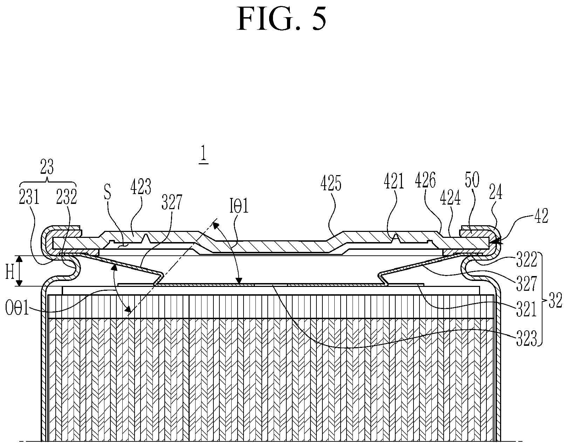

FIG. 5 is a cross-sectional view of a portion of the rechargeable battery shown in FIG. 1 in which the gasket is disposed and, then, the vent plate is combined to the second opening in the case.

Referring to FIG. 3 to FIG. 5, the second current collecting plate 32 has a base portion 326, a bottom welding portion 321, an elastic portion 327, and a wing welding portion 322. The base portion 326 is disposed on the uncoated portion 12b of the second electrode 12.

The bottom welding portion 321 extends outwardly in a radius direction (or radial direction) from the base portion 326 and is welded to the uncoated portion 12b of the second electrode 12. The wing welding portion 322 is spaced apart from the bottom welding portion 321 in the circumferential direction, is connected to the base portion 326 by the elastic portion 327, and is welded to the beading portion 23.

The second current collecting plate 32 is formed by cutting and bending a base substrate, and the bottom welding portion 321 and the wing welding portion 322 are respectively provided in plurality. The bottom welding portion 321 and the wing welding portion 322 are alternately disposed along the circumferential direction around the base portion 326. Thus, the bottom welding portion 321 and the wing welding portion 322 may form a balanced (or repeating) structure along the circumferential direction.

During welding, the bottom welding portion 321 forms a first weld line 324 in the diameter direction. The wing welding portion 322 forms a second weld line 325 in the circumferential direction. The wing welding portion 322 extends in the circumferential direction longer than a width (e.g., a circumferential width) W of the elastic portion 327.

Accordingly, the bottom welding portion 321 is evenly connected along the circumferential direction to an area of the uncoated portion 12b, and the wing welding portion 322 is evenly connected along the circumferential direction to an area of the beading portion 23. Accordingly, current may flow uniformly along the circumferential direction in the entire area from second electrode 12 to the beading portion 23 of the case 20.

Referring to FIG. 5, the elastic portion 327 is bent at at least one first inward angle Iθ1 toward a center in the radial direction of the base portion 326 and at at least one first outward angle Oθ1 in the outer radial direction. The first inward angle Iθ1 forms an acute angle between the base portion 326 and the elastic portion 327. As an example, the first inward angle Iθ1 may be in a range of about 30 degrees to about 45 degrees.

Because the base portion 326 and the elastic portion 327 have the first inward angle Iθ1 and the first outward angle Oθ1 as acute angles, interference between the second current collecting plate 32 and the uncoated portion 12b of the second electrode 12 can be prevented.

The first inward angle Iθ1 is smaller than the first outward angle Oθ1, thereby forming a direction in which the elastic portion 327 floats, and because the floating force acts away from the uncoated portion 12b, interference between the elastic portion 327 of the second current collecting plate 32 and the uncoated portion 12b of the second electrode 12 can be further prevented.

Even when a height H between the vent plate 42 and the uncoated portion 12b of the second electrode 12 is relatively small due to the crimping process, the elastic portion 327 is separated from the uncoated portion 12b and, therefore, interference between the elastic portion 327 and the uncoated portion 12b of the second electrode 12 can be prevented.

The force to lift the elastic portion 327 from the uncoated portion 12b provides a force that more strongly adheres the base portion 326 to the uncoated portion 12b because the elastic portion 327 is fixed to the beading portion 23 and the crimping portion 24.

In addition, a space S separated from the uncoated portion 12b of the second electrode 12 is further formed by an inner surface of a convex portion 423 of the vent plate 42. The space S further assures an accommodation space for the elastic portion 327 having the floating force and, therefore, interference between the elastic portion 327 and the vent plate 42 can be further prevented.

In addition, the base portion 326 has a penetration hole (e.g., an opening or through-hole) 323 at a center thereof, and the bottom welding portion 321 and the elastic portion 327 are connected through a concave groove in the base portion 326. The concave groove 328 is provided between the bottom welding portion 321 and the elastic portion 327 and disperses any concentrated stress transmitted from the elastic portion 327 such that crack damage between the bottom welding portion 321 and the elastic portion 327 can be prevented.

The penetration hole 323 and the concave groove 328 may absorb and alleviate any deformation caused by welding of the bottom welding portion 321 and the uncoated portion 12b and the vibration and impact that may be transmitted between the wing welding portion 322 and the bottom welding portion 321. The penetration hole 323 and the concave groove 328 may have a size range that can absorb vibration and impact without increasing current resistance between the wing welding portion 322 and the bottom welding portion 321.

The illustrated embodiment shows that the base portion 326 has the penetration hole 323. However, in another embodiment, the base portion 326 may not have a penetration hole. As a force is applied on an outer portion of the elastic portion 327 floating in the radial direction from the uncoated portion 12b, the bottom welding portion 321 and the base portion 326 receive a force pressing against the uncoated portion 12b. When the base portion does not have the penetration hole, the base portion may more closely contact the uncoated portion 12b.

The beading portion 23 has a flat portion (or substantially flat portion) 232 formed parallel to the plane formed by the cross-section of the uncoated portion 12b on the upper side of the inwardly convex curved portion 231. The wing welding portion 322 of the second current collecting plate 32 is welded to the flat portion 232. Therefore, the second current collecting plate 32 may be stably contacted and welded to the beading portion 23 of the case 20, thereby providing a more uniform current flow.

In addition, the wing welding portion 322 extends further along the circumferential direction at the end (e.g., at a distal end) than the size of the width W of the elastic portion 327 connected to the base portion 326, and thus, the contact area and welding area with the flat portion 232 can be further increased, thereby preventing the resistance at the welding portion from increasing.

Referring to FIG. 4 and FIG. 5, the gasket 50 has an escape groove 51 that accommodates the wing welding portion 322. The escape groove 51 increases the stability of the gasket 50 by reducing deformation of the gasket 50 between the wing welding portion 322 and the vent plate 42 during the crimping process.

The gasket 50 further includes a compression portion 52 that contacts the flat portion 232 outside the escape groove 51 in the radial direction for air-tight compression. Despite the escape groove 51, the compression portion 52 implements sufficient air-tightness between the flat portion 232 and the vent plate 42. To this end, the compression portion 52 forms a curved surface corresponding to a curvature of the crimping portion 24, and thus, a difference in compression deformation of the gasket 50 within the crimping portion 24 can be reduced or minimized.

Referring to FIG. 2, FIG. 3, and FIG. 5, an embodiment in which the elastic portion 327 is curved at one first inward angle Iθ1 and one first outward angle Oθ1 is illustrated. That is, the first inward angle Iθ1 is formed between the base portion 326 and the elastic portion 327 and bends upwardly and inwardly in the radial direction.

The elastic portion 327 is bent inwardly at the first inward angle Iθ1, then upwardly and outwardly in the radial direction. The wing welding portion 322 is bent outwardly at the top of the elastic portion 327 and is welded to the beading portion 23.

The escape groove 51 is formed at a right angle relative to the compression portion 52 to stably accommodate an end (e.g., a distal end) of the wing welding portion 322 and to prevent misalignment of the wing welding portion 322 and the gasket 50. The escape groove 51 is formed at an obtuse angle on the inside of the radial direction to induce the combination of a bending structure of an upper end portion (e.g., a distal end or a distal end portion) of the wing welding portion 322 and the elastic portion 327 and to stably accommodate the bending structure of the wing welding portion 322 and the upper end portion of the elastic portion 327. The wing welding portion 322 and the upper end portion of the elastic portion 327 may be bent at an obtuse angle structure to correspond to the escape groove 51.

Referring to FIG. 4, the gasket 50 has a penetration hole (e.g., an opening or groove) 53 inside of the escape groove 51 in the radial direction. The penetration hole 53 perpendicularly connects a top surface 54 and a bottom surface 55 of the gasket 50 through a side surface thereof.

The gasket 50 has a convex portion 56 that is convexly formed on an inner side to further form the penetration hole 53 inwardly in the penetration direction. The convex portion 56 prevents the wing welding portion 322 and the elastic portion 327, and the bending structure of the upper portion of the first outward angle Oθ1 from being pushed into the vent plate 42.

Because the penetration hole 53 in the gasket 50 corresponds to an outer portion 424 of the vent plate 42, the inside of the gasket 50, which is compressed and deformed through the crimping process, may be prevented from interfering with the second current collecting plate 32.

The vent plate 42 has a notch 421 in an inner surface thereof. When an event occurs in the rechargeable battery 1, the notch 421 is cut (e.g., bursts) to discharge internal pressure to prevent a secondary explosion. The vent plate 42 is formed as a disk and has a central portion 422, a convex portion 423, and an outer portion 424.

The central portion 422 of the vent plate 42 is formed to be concave toward the electrode assembly 10 on the outer side (i.e. convex from the inside), and the convex portion 423 further assures (or provides) a space S by being formed to be convex away from the electrode assembly 10 at an outer side (i.e. concave from the inside), in the diameter direction, of the central portion 422, and the outer portion 424 may be on the same plane as the central portion 422 in an outer diameter direction of the convex portion 423. In Figure 2, however, the outer portion 424 forms an intermediate plane - between the planes of the central portion 422 and the convex portion 423.

An inner inclined surface 425 and an outer inclined surface 426 are formed in a portion at where the central portion 422 and the convex portion 423 are connected and a portion at where the convex portion 423 and the outer portion 424 are connected, respectively. The inner inclined surface 425 and the outer inclined surface 426 enhance the rigidity of the vent plate 42 against the internal pressure of the rechargeable battery 1.

The notch 421 may be formed in the inner surface of the convex portion 423, for example at or before the outer inclined surface 426, so that the convex portion 423 can be easily cut (or burst) in response to an internal pressure concentration in the space S during an event. The notch 421 may be formed in the entire area along the circumferential direction of the vent plate 42 or may be formed in plurality, with each one being spaced apart at regular (or predetermined) intervals.

Hereinafter, other embodiments of the present disclosure will be described. Compared to the embodiments described above, descriptions of the same or substantially similar configurations will be omitted while descriptions of different configurations will be primarily described.

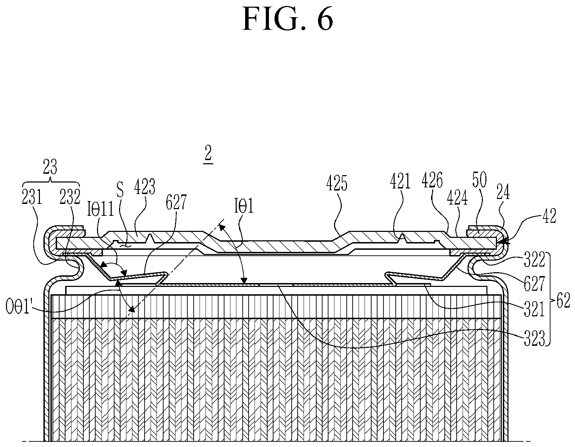

FIG. 6 is a cross-sectional view of a portion of a rechargeable battery according to another embodiment of the present disclosure in which a vent plate is combined to a second opening in a case by interposing a gasket therebetween. Referring to FIG. 6, a rechargeable battery 2, according to another embodiment, may include a second current collecting plate 62 having an elastic portion 627 that is bent at two inward angles, that is, a first inward angle Iθ1 and an eleventh inward angle Iθ11, and one first outward angle Oθ1'.

The elastic portion 627 is provided in addition to the structure of the elastic portion 327, described above. The elastic portion 627 is bent once more at the eleventh inward angle Iθ11 toward a center in a radius direction (or radial direction) of the base portion 326 after being bent at the first outward angle Oθ1'. The first outward angle Oθ1' is formed as an acute angle, and the eleventh inward angle Iθ11 forms the elastic portion 627 and is an obtuse angle at an upper end of the first outward angle Oθ1.

That is, the first inward angle Iθ1 is formed between the base portion 326 and the elastic portion 627 and bends upwardly and is then bent inwardly in the radial direction. The first outward angle Oθ1' is bent inwardly and then bent upwardly and outwardly in the radial direction. The eleventh inward angle Iθ11 is bent upwardly after being bent outward and is then bent inwardly (e.g., substantially upwardly) in the radius direction. The wing welding portion 322 is bent outwardly at an upper end of the elastic portion 627 and is welded to the beading portion 23.

An escape groove 51 is formed in the gasket 50 at an obtuse angle on an inner side in the radial direction to induce bonding of the bent structure of the wing welding portion 322 and an upper portion of the eleventh inward angle Iθ11 of the elastic portion 627 and stably accommodates the bent structure of the wing welding portion 322 and the upper end portion of the eleventh inward angle Iθ11. The wing welding portion 322 and the upper portion of the eleventh inward angle Iθ11 of the elastic portion 627 may be bent to correspond to the obtuse angle structure of the escape groove 51.

The first inward angle Iθ1 and the first outward angle Oθ1' are formed between the base portion 326 and the elastic portion 627 at an acute angle, and the eleventh inward angle 1011 forms an obtuse angle, thereby preventing interference between the second current collecting plate 62 and the uncoated portion 12b of the second electrode 12 .

Because the eleventh inward angle Iθ11 is an obtuse angle, a direction in which the elastic portion 627 floats from the uncoated portion 12b is formed and the floating force from the uncoated portion 12b is applied such that interference between the elastic portion 627 of the second current collecting plate 62 and the second electrode 12 of the uncoated portion 12b can be further prevented.

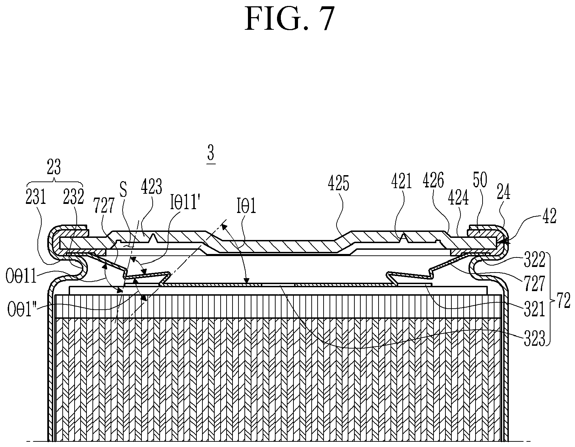

FIG. 7 is a cross-sectional view of a portion of a rechargeable battery according to another embodiment of the present disclosure in which a vent plate is combined to a second opening in a case by interposing a gasket therebetween. Referring to FIG. 7, a rechargeable battery 3, according to another embodiment, may include a second current collecting plate 72 having an elastic portion 727 that is formed by being bent at two inward angles, that is, a first inward angle Iθ1 and an eleventh inward angle Iθ11' and two outward angles, that is, a first outward angle Oθ1" and an eleventh outward angle Oθ11.

The elastic portion 727 of the second current collecting plate 72 is provided in addition to the structure of the elastic portion 327, described above. The elastic portion 727 is bent once more at the eleventh inward angle Iθ11' toward a center in a radius direction (or radial direction) of the base portion 326 after being bent at the first outward angle Oθ1". The first outward angle Oθ1" is an acute angle.

The elastic portion 727 is bent once more at the eleventh outward angle Oθ11 toward an outer edge of the base portion 326 after being bent at the eleventh inward angle Iθ11'. The eleventh inward angle Iθ11' is an acute angle. The eleventh outward angle Oθ11 forms the elastic portion 727 at an obtuse angle at an upper end of the first outward angle Oθ1.

For example, the first inward angle Iθ1 is connected to the base portion 326 and bends upwardly and is then bent inwardly in the radial direction. The first outward angle Oθ1" is bent inwardly and is then bent upwardly and outwardly in the radial direction. The eleventh inward angle Iθ11 is bent upwardly after being bent outwardly and is then bent inwardly (e.g., substantially upwardly) in the radial direction. The eleventh outward angle Oθ11 is bent upwardly after being bent inwardly and is then bent outwardly (e.g., substantially downwardly) in the radial direction. The wing welding portion 322 is bent outwardly at an upper end of elastic portion 727 and is welded to the beading portion 23.

An escape groove 51 is formed in the gasket 50 at an obtuse angle on an inner side in the radial direction to induce bonding of the bent structure of the wing welding portion 322 and an upper portion of the eleventh outward angle Iθ11 of the elastic portion 627 and to stably accommodate the bent structure of the wing welding portion 322 and the upper end portion of the eleventh outward angle Iθ11. The wing welding portion 322 and the upper portion of the eleventh outward angle Iθ11 of the elastic portion 627 may be bent to correspond to the obtuse angle structure of the escape groove 51.

The first inward angle Iθ1 and the first outward angle Oθ1" form at an acute angle between the base portion 326 and the elastic portion 727, the eleventh inward angle Iθ11' forms an acute angle, the eleventh outward angle Oθ11 forms an obtuse angle, and accordingly, interference between the second current collecting plate 72 and the uncoated portion 12b of the second electrode 12 can be prevented.

Because the eleventh inward angle Iθ11' is an acute angle and the eleventh outward angle Oθ11 is an obtuse angle, the elastic portion 727 extends in a floating direction from the uncoated portion 12b and the floating force is applied from the uncoated portion 12b such that interference between the elastic portion 727 of the second current collecting plate 72 and the second electrode 12 of the uncoated portion 12b can be further prevented.

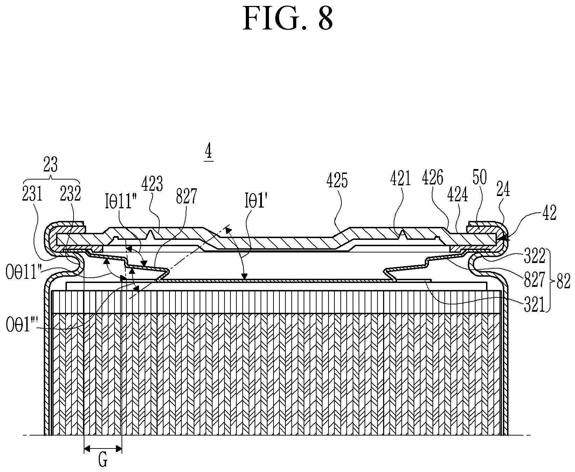

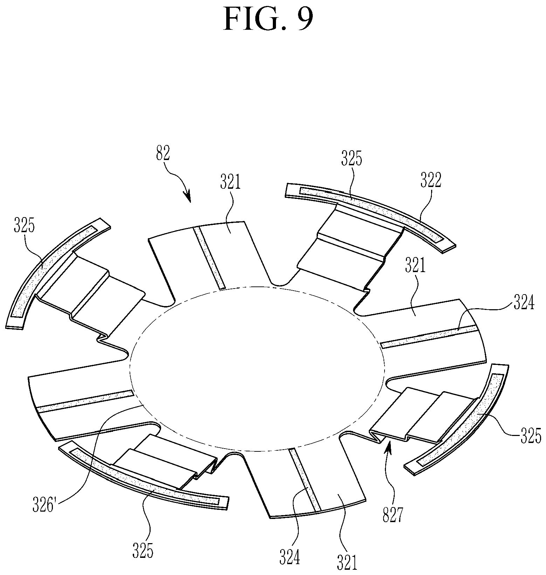

FIG. 8 is a cross-sectional view of a rechargeable battery according to another embodiment of the present disclosure in which a vent plate is combined to a second opening in a case by interposing a gasket therebetween, and FIG. 9 is a perspective view of a second current collecting plate shown in FIG. 8. Referring to FIG. 8 and FIG. 9, a rechargeable battery 4, according to another embodiment, may include a second current collecting plate 82 having an elastic portion 827 that is formed by being bent at two inward angles, that is, a first inward angle Iθ1' and an eleventh inward angle Iθ11" and two outward angles, that is, a first outward angle Oθ1‴ and an eleventh outward angle Oθ11".

The elastic portion 827 is provided in addition to the structure of the elastic portion 327, described above. The elastic portion 827 is bent once more at the eleventh inward angle Iθ11" toward a center in a radial direction of a base portion 326' after being bent at the first outward angle Oθ1‴. The first outward angle Oθ1‴ is an acute angle.

The elastic portion 827 is bent once more at the eleventh outward angle Oθ11" toward an outer edge of the base portion 326' after being bent at the eleventh inward angle Iθ11". The eleventh inward angle Iθ11" is an acute angle. The eleventh outward angle Oθ11" forms the elastic portion 827 at an obtuse at an upper end of the eleventh inward angle Iθ11".

That is, first inward angle Iθ1' is formed between the base portion 326' and the elastic portion 827 and bends upwardly and is then bent inwardly in the radial direction. The first outward angle Oθ1‴ is bent inwardly and is then bent upwardly and outwardly in the radial direction. The eleventh inward angle Iθ11" is bent upwardly after being bent outwardly and is then bent inwardly (e.g., substantially upwardly) in the radial direction. The eleventh outward angle Oθ11" is bent upward after being bent inward, and then bent outward (substantially downward) in the radius direction. The wing welding portion 322 is bent outward at an upper end of the elastic portion 827 and welded to a beading portion 23.

An escape groove 51 is formed in the gasket 50 at an obtuse angle on an inner side in the radial direction to induce bonding of a bent structure of the wing welding portion 322 and an upper portion of the eleventh outward angle Iθ11" of the elastic portion 827 and to stably accommodate a bent structure of the wing welding portion 322 and the upper end portion of the eleventh outward angle Iθ11". The wing welding portion 322 and the upper portion of the eleventh outward angle Iθ11" of the elastic portion 827 may be bent to correspond to the obtuse angle structure of the escape groove 51.

The first inward angle Iθ1' and the first outward angle Oθ1" ' are formed between the base portion 326' and the elastic portion 827 at an acute angle, the eleventh inward angle Iθ11" forms an obtuse angle, and the eleventh outward angle Oθ11" forms an obtuse angle, thereby preventing interference between the second current collecting plate 82 and the uncoated portion 12b of the second electrode 12 .

Because the eleventh inward angle Iθ11" is an acute angle and the eleventh outward angle Oθ11" is an obtuse angle, a direction in which the elastic portion 827 floats from the uncoated portion 12b is formed and the floating force from the uncoated portion 12b is applied such that interference between the elastic portion 827 of the second current collecting plate 82 and the uncoated portion 12b of the second electrode 12 can be further prevented.

A gap G is formed or maintained between an outer end of the bottom welding portion 321 and an inner end of the beading portion 23 in the radial direction of the base portion 326'. When a penetration hole is not provided in a center of the base portion 326', the electrode assembly 10 can be inserted into the case 20 in a state in which the second current collecting plate 82 is welded to the electrode assembly 10. In such an embodiment, the second current collecting plate 82 may contact the uncoated portion 12b of the second electrode 12 across its the entire area.

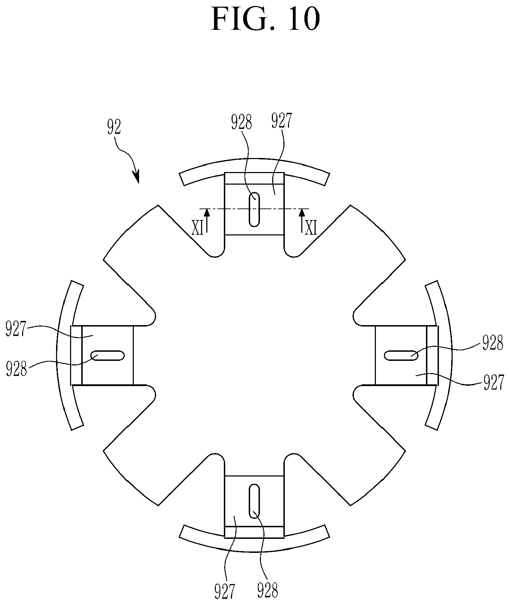

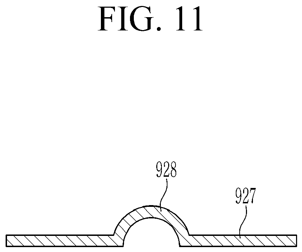

FIG. 10 is a top plan view of a second current collecting plate according to another embodiment, and FIG. 11 is a cross-sectional view of the second current collecting plate shown in FIG. 10. Referring to FIGS. 10 and 11, the second current collecting plate 92 further includes an elastic portion 927 provided with a rib 928 extending in a radius direction (or a radial direction) of the base portion 326'.

The inward angle and the outward angle of the elastic portion 927 forms a floating direction from the uncoated portion 12b, and the floating force from the uncoated portion 12b is applied such that the elastic portion 927 of the second current collecting plate 92 presses the uncoated portion 12b of the second electrode 12. In such an embodiment, the rib 928 reinforces the pressing force of the elastic portion 927, and thus, the base portion 326' can be more firmly electrically contacted with the uncoated portion 12b.

The rib 928 may be applied to the elastic portions 327, 627, 727, and 827, described above. The rib 928 may be provided in plurality in a range of widths and may be formed as one or in plurality along a length in a bending direction. In FIGS. 10 and 11, an embodiment in which a single rib 928 is formed along the bending length direction is illustrated.

Although embodiments of the present disclosure have been described, it is to be understood that the present disclosure is not limited to the disclosed embodiments. Various modifications may be made within the scopes of the claims and their equivalents, the description of the present disclosure, and the accompanying drawings.

### Description of Some Reference Symbols

| | | | |
|---|---|---|---|
| 1, 2, 3, 4: | rechargeable battery | | |
| 10: | electrode assembly | 11: | first electrode |
| 11a, 12a: | coated portion | 11b, 12b: | uncoated portion |
| 12: | second electrode | 13: | separator |
| 20: | case | 21: | first opening |
| 22: | second opening | 23: | beading portion |
| 24: | crimping portion | 31: | first current collecting plate |

| | | | |
|---|---|---|---|
| 32: | second current collecting plate | 41: | electrode terminal |
| 42: | vent plate | 50: | gasket |
| 51: | escape groove | 52: | compression portion |
| 53: | penetration hole | 54: | top surface |
| 55: | bottom surface | 62: | second current collecting plate |
| 72: | second current collecting plate | 82: | second current collecting plate |
| 92: | second current collecting plate | 211: | sealing member |
| 321: | bottom welding portion | 322: | welding wing portion |
| 323: | penetration hole | 324: | first weld line |
| 325: | second weld line | 326, 326': | base portion |
| 327: | elastic portion | 328: | concave groove |
| 421: | notch | 422: | central portion |
| 423: | convex portion | 424: | outer portion |
| 425: | inner inclined surface | 426: | outer inclined surface |
| 627: | elastic portion | 727: | elastic portion |
| 827, 927: | elastic portion | 928: | rib |
| Iθ1: | first inward angle | Iθ1': | first inward angle |
| Iθ11: | eleventh inward angle | Iθ11': | eleventh inward angle |
| Iθ11 ": | eleventh inward angle | Oθ1 | first outward angle |
| Oθ1': | first outward angle | Oθ1": | first outward angle |
| Oθ1" ': | first outward angle | Oθ11": | eleventh outward angle |
| W: | width | | |

Embodiments are set out in the following clauses:
Clause 1. A rechargeable battery comprising:
   an electrode assembly that is formed by spirally winding a first electrode, a separator, and a second electrode;
   a case in which the electrode assembly is embedded;
   an electrode terminal that is provided in an insulated state in a first opening at one side of the case;
   a first current collecting plate through which the first electrode is connected to the electrode terminal;
   a vent plate that closes and seals a second opening at the other side of the case;
   a second current collecting plate that connects the second electrode to a beading portion of the case at an inner side of the vent plate; and
   a gasket that is disposed between the second current collecting plate and the vent plate and between the second current collecting plate and the case and serves to provide closing and sealing by a crimping portion connected to the beading portion,
   wherein the second current collecting plate comprises;
      a base portion placed on an uncoated portion of the second electrode,
      an elastic portion connected to the base portion, and
      a wing welding portion connected to the elastic portion and welded to the beading portion,
   the elastic portion is bent at at least one first inward angle toward a center of the radius direction and at least one first outward angle toward an outer edge of the radius direction, and
   the first inward angle forms the base portion and the elastic portion at an acute angle.
Clause 2. The rechargeable battery of clause 1, wherein:
   the second current collecting plate further comprising a bottom welding portion that extends outward in the radius direction from the base portion and is welded to the uncoated portion of the second electrode, and
   the elastic portion is spaced apart from the bottom welding portion in a circumferential direction and connected to the outside of the radius direction of the base portion.
Clause 3. The rechargeable battery of clause 1, wherein:
   the first inward angle Iθ1 is set to be smaller than the first outward angle Oθ1.
Clause 4. The rechargeable battery of clause 1, wherein:
   the bottom welding portion and the wing welding portion are each formed in plural and arranged alternately along the circumferential direction in the base portion.
Clause 5. The rechargeable battery of clause 4, wherein:
   the bottom welding portion and the elastic portion are connected by a concave groove in the base portion and disperse the stress concentrated between the bottom welding portion and the elastic portion.
Clause 6. The rechargeable battery of clause 5, wherein:
   the bottom welding portion forms a first welding line along the radius direction, and
   the wing welding portion forms a second welding line along the circumferential direction.
Clause 7. The rechargeable battery of clause 5, wherein:
   the wing welding portion extends in a circumferential direction longer than a width of the elastic portion.
Clause 8. The rechargeable battery of clause 1, wherein:
   the first inward angle is connected to the base portion and bends upward and inward in the radius direction,
   the first outward angle is bent upward after being bent inward, and then bent outward in the radius direction, and
   the wing welding portion is bent outward at an upper end of the elastic portion and welded to the beading portion.
Clause 9. The rechargeable battery of clause 8, wherein:
   the gasket is provided with an escape groove that accommodates the wing welding portion,
   the escape groove further accommodates an upper end of the first outward angle of the elastic portion, and
   an inner protrusion of the escape groove provides further insulation between the upper end of the first outward angle and the vent plate.
Clause 10. The rechargeable battery of clause 8, wherein:
   the beading portion is provided with a flat portion formed on an upper side of a curved portion convex inward,
   the wing welding portion is welded to the flat portion.
Clause 11. The rechargeable battery of clause 1, wherein:
   the elastic portion is bent once more at an eleventh inward angle toward the center of the radius direction of the base portion after being bent at the first outward angle,
   the first outward angle is formed as an acute angle, and
   the eleventh inward angle forms the elastic portion at an obtuse angle at the upper end of the first outward angle.
Clause 12. The rechargeable battery of clause 1, wherein:
   the elastic portion is bent once more at an eleventh inward angle toward the center of the radius direction of the base portion after being bent at the first outward angle,
   the first outward angle is formed as an acute angle,
   the elastic portion is bent once more at an eleventh outward angle toward an outer edge of the base portion after being bent at the eleventh inward angle,
   the eleventh inward angle forms an acute angle, and
   the eleventh outward angle forms the elastic portion at an obtuse angle at an upper end of the eleventh inward angle.
Clause 13. The rechargeable battery of clause 1, wherein:
   the elastic portion is bent once more at an eleventh inward angle toward the center of the radius direction of the base portion after being bent at the first outward angle,
   the first outward angle is formed as an acute angle,
   the elastic portion is bent once more at an eleventh outward angle toward an outer edge in the radius direction of the base portion after being bent at the eleventh inward angle,
   the eleventh inward angle forms an obtuse angle, and
   the eleventh outward angle forms the elastic portion at an obtuse angle at an upper end of the eleventh inward angle.
Clause 14. The rechargeable battery of clause 2, wherein:
   a gap is maintained between an outer end of the bottom welding portion and an inner end of the beading portion in the radius direction of the base portion.
Clause 15. The rechargeable battery of clause 2, wherein:
   the base portion is in contact with an uncoated portion of the second electrode is the entire area.
Clause 16. The rechargeable battery of clause 1, wherein:
   the elastic portion is further provided with a rib extending in the radius direction of the base portion.

## Claims

1. A rechargeable battery comprising:
an electrode assembly formed by spirally winding a first electrode, a separator, and a second electrode;
a case accommodating the electrode assembly;
an electrode terminal in a first opening at one side of the case and electrically insulated from the case;
a first current collecting plate electrically connecting the first electrode and the electrode terminal;
a vent plate closing and sealing a second opening at another side of the case;
a second current collecting plate electrically connecting the second electrode and a beading portion of the case at an inner side of the vent plate; and
a gasket between the second current collecting plate and the vent plate and between the second current collecting plate and the case, the gasket closing and sealing between a crimping portion connected to the beading portion,
wherein the second current collecting plate comprises:
a base portion on an uncoated portion of the second electrode;
an elastic portion connected to the base portion; and
a wing welding portion connected to the elastic portion and welded to the beading portion,
wherein the elastic portion is bent at a first inward angle toward a center of the base portion in a radial direction thereof and at a first outward angle toward an outer edge of the base portion in the radial direction, and
wherein the first inward angle is an acute angle formed between the base portion and the elastic portion.

2. The rechargeable battery of claim 1, wherein the second current collecting plate further comprises a bottom welding portion extending outwardly in the radial direction from the base portion and is welded to the uncoated portion of the second electrode, and
wherein the elastic portion is spaced apart from the bottom welding portion in a circumferential direction of the base portion and is connected to an outer edge of the base portion in the radial direction.

3. The rechargeable battery of claim 2, wherein a gap is maintained between an outer end of the bottom welding portion and an inner end of the beading portion in the radial direction of the base portion.

4. The rechargeable battery of claim 2 or claim 3, wherein the base portion contacts the uncoated portion of the second electrode across its entire area.

5. The rechargeable battery of any one of claims 2 to 4, wherein the bottom welding portion and the wing welding portion are each formed in plural and arranged alternately along the base portion in a circumferential direction of the base portion, and optionally wherein the bottom welding portion and the elastic portion are connected by a concave groove in the base portion to disperse stress concentrated between the bottom welding portion and the elastic portion.

6. The rechargeable battery of claim 5, wherein the bottom welding portion has a first welding line extending in the radial direction, and
wherein the wing welding portion has a second welding line extending in the circumferential direction.

7. The rechargeable battery of any one of the preceding claims, wherein the first inward angle is smaller than the first outward angle.

8. The rechargeable battery of any one of the preceding claims, wherein the wing welding portion extends farther in the circumferential direction than a width of the elastic portion.

9. The rechargeable battery of any one of the preceding claims, wherein the elastic portion bends upwardly and inwardly in the radial direction at the first inward angle,
wherein the elastic portion bends upwardly and outwardly in the radial direction at the first outward angle, and
wherein the wing welding portion is bent outwardly at a distal end of the elastic portion and is welded to the beading portion.

10. The rechargeable battery of any one of the preceding claims, wherein the gasket has an escape groove to accommodate the wing welding portion,
wherein the escape groove also accommodates the distal end of the elastic portion, and
wherein an inner protrusion in the escape groove insulates between the distal end of the elastic portion and the vent plate.

11. The rechargeable battery of any one of the preceding claims, wherein the beading portion has a flat portion at an upper side of a curved portion thereof, and
wherein the wing welding portion is welded to the flat portion.

12. The rechargeable battery of any one of the preceding claims, wherein the elastic portion is bent at an eleventh inward angle toward a center of the base portion in the radial direction after being bent at the first outward angle,
wherein the first outward angle is an acute angle, and
wherein the eleventh inward angle forms an obtuse angle at a portion of the elastic portion after the first outward angle.

13. The rechargeable battery of any one of claims 1 to 11, wherein the elastic portion is bent at an eleventh inward angle toward a center of the base portion in the radial direction after being bent at the first outward angle,
wherein the first outward angle is an acute angle,
wherein the elastic portion is bent at an eleventh outward angle toward an outer edge of the base portion after being bent at the eleventh inward angle,
wherein the eleventh inward angle is an acute angle, and
wherein the eleventh outward angle forms an obtuse angle at a portion of the elastic portion after the eleventh inward angle.

14. The rechargeable battery of any one of claims 1 to 11, wherein the elastic portion is bent at an eleventh inward angle toward a center of the base portion in the radial direction after being bent at the first outward angle,
wherein the first outward angle is an acute angle,
wherein the elastic portion is bent at an eleventh outward angle toward an outer edge of the base portion in the radial direction after being bent at the eleventh inward angle,
wherein the eleventh inward angle is an obtuse angle, and
wherein the eleventh outward angle forms an obtuse angle at a portion of the elastic portion after the eleventh inward angle.

15. The rechargeable battery of any one of the preceding claims, wherein the elastic portion has a rib extending in the radial direction of the base portion.
